# FASCICULE DE BREVET EUROPEEN

(11) **EP 2 733 967 B1**
(45) Date de publication et mention de la délivrance du brevet: **10.04.2019**
(21) Numéro de dépôt: 13185996.9
(22) Date de dépôt: 25.09.2013
(51) Int. Cl.: H04W 4/60, H04W 4/00

(54) **Procédé d'amélioration de l'interface utilisateur pour les applications sim-toolkit**
Verfahren zur Verbesserung der Benutzerschnittstelle für Sim-Toolkit-Anwendungen
Method for improving the user interface for SIM-Toolkit applications

(30) Priorité: 02.10.2012 FR 1259345
(43) Date de publication de la demande: 21.05.2014
(73) Titulaire: IDEMIA France, 92700 Colombes (FR)
(72) Inventeur: Chamblain, Xavier, 92700 Colombes (FR); Laazimani, Omar, 92700 Colombes (FR)
(74) Mandataire: Delumeau, François Guy

(56) Documents cités:
- EP-A1- 2 461 640
- GB-A- 2 478 971
- US-A1- 2005 277 432

## Description

La présente invention se situe dans le domaine des terminaux de communication comportant des moyens de connexion avec un élément sécurisé, par exemple avec une carte à microcircuit conforme à la norme ISO 7816.

De façon connue, il est usuel de prévoir, dans une telle architecture, un mécanisme permettant aux applications de l'élément sécurisé d'interagir avec un module du terminal pour rendre un certain nombre de services.

Le document US 2005/277432 décrit un procédé mis en oeuvre par un élément sécurisé comportant une application apte à envoyer une commande à un terminal.

Le mécanisme SIM Toolkit (STK) défini par le standard ETSI GSM 11.14 définit comment des applications STK d'une carte SIM peuvent interagir avec le terminal mobile auquel elle est connectée.

L'invention vise à améliorer de tels mécanismes.

### Objet et résumé de l'invention

Plus précisément, l'invention concerne un procédé mis en oeuvre par un module logiciel de type Proxy réalisant l'interface entre une première application mise en oeuvre par un élément sécurisé connecté à un terminal et un module logiciel ou matériel de ce terminal, ce module étant apte à exécuter une commande reçue de cette première application afin d'obtenir un premier résultat.

Ce procédé comporte :
- une étape pour vérifier si le terminal comporte une deuxième application apte à exécuter la commande précitée, afin d'obtenir un deuxième résultat enrichi par rapport au premier résultat grâce à l'utilisation de ressources du terminal,
- si c'est le cas, une étape d'envoi de la commande précitée à la deuxième application ; et
- si ce n'est pas le cas, une étape d'envoi de cette commande au module.

Corrélativement, l'invention vise également un module logiciel de type Proxy comprenant une interface de communication avec une première application d'un élément sécurisé, une interface de communication avec un module d'un terminal auquel est connecté cet élément sécurisé, ce module étant apte à éxécuter une commande reçue de la première application afin d'obtenir un premier résultat, et une interface de communication avec une deuxième application susceptible d'être installée dans le terminal et apte à exécuter la commande précitée, afin d'obtenir un deuxième résultat enrichi par rapport au premier résultat, grâce à l'utilisation de ressources du terminal. Ce module logiciel comporte des instructions pour exécuter les étapes d'un procédé tel que mentionné ci-dessus lorsqu'il est exécuté par un processeur de l'élément sécurisé.

L'invention vise également un élément sécurisé comportant une première application apte à envoyer au moins une commande à un module d'un terminal auquel l'élément sécurisé est connecté, ce module étant apte à exécuter une commande reçue de la première application afin d'obtenir un premier résultat, cette première application étant également apte à communiquer avec un module logiciel de type Proxy, tel que mentionné ci-dessus.

Dans un mode particulier de réalisation de l'invention, l'élément sécurisé est conforme à la norme ISO 7816 et/ou aux Critères Communs et/ou à la norme FIPS (Federal Information Processing Standard).

L'invention vise enfin un terminal comprenant des moyens de communication avec un élément sécurisé tel que mentionné ci-dessus, un module matériel ou logiciel apte à exécuter une commande reçue d'une première application de cet élément sécurisé afin d'obtenir un premier résultat et une deuxième application apte à recevoir cette commande d'un module logiciel de type Proxy tel que mentionné ci-dessus et à exécuter cette commande afin d'obtenir un deuxième résultat enrichi par rapport au premier résultat, grâce à l'utilisation de ressources du terminal.

Ainsi, et de façon très avantageuse, le procédé vérifie si une application installée dans le terminal est apte à traiter la commande en vue d'obtenir un résultat enrichi par rapport à celui qui serait obtenu si la commande était exécutée par le module du terminal, la commande étant envoyée à ce module si l'application n'est pas installée.

Dans un mode particulier de réalisation, le module du terminal est un module Sim Toolkit (STK) apte à traiter des commandes STK reçues de la première application selon le protocole ETSI TS 101.267.

Dans ce mode de réalisation, la commande peut être une commande d'affichage et la deuxième application, une application apte à afficher un menu STK enrichi par rapport au menu STK de base.

Dans ce mode de réalisation, l'homme du métier comprendra que les menus SIM-Toolkit qui sont proposés à l'utilisateur du terminal sont les menus SIM-Toolkit de base, tels que prévus par les modules STK traditionnels en l'absence d'application d'affichage enrichie installée dans le terminal. En revanche, dès lors qu'une application d'affichage enrichie est mise en oeuvre par le terminal, toutes les commandes SIM Toolkit reçues de l'application de l'élément sécurisé sont transmises à cette application d'affichage enrichie afin de permettre un affichage évolué par rapport à celui prévu par le module STK.

Les commandes précitées peuvent être des commandes d'affichage du menu SIM-Toolkit ou des commandes nécessitant une interaction avec l'utilisateur comme des commandes de saisie ou de détection d'une sélection particulière.

De façon avantageuse, il n'est pas nécessaire, conformément à l'invention, de configurer une liste de commandes qui bénéficient de traitement particulier, au niveau du module Proxy ce dernier connaissant la liste des commandes STK supportées par l'application d'affichage enrichie.

Dans un mode particulier de réalisation, le procédé selon l'invention comporte une étape d'envoi, au module, d'au moins une autre commande reçue en combinaison avec la commande précitée.

Par exemple, dans un mode particulier de réalisation, le procédé selon l'invention comporte une étape d'envoi, au module STK, selon le protocole ETSI TS 101.267, de toute autre commande reçue par le proxy (par exemple d'envoi d'un SMS) en combinaison avec la commande précitée, la combinaison de ces commandes pouvant être qualifiée de commande complexe. Le procédé fonctionne alors dans un mode hybride dans lequel les commandes au sens de l'invention sont traitées par l'application d'affichage enrichie du terminal, les autres commandes étant traitées, de façon classique, par le module STK du terminal.

Dans ce mode de réalisation, le module Proxy selon l'invention est apte à déterminer au sein des commandes complexes, les commandes à envoyer au module STK du terminal et les commandes à envoyer à l'application d'affichage enrichi.

Dans un mode particulier de réalisation, le procédé selon l'invention comporte une étape d'envoi d'une commande au module pour déclencher l'activation de la deuxième application par le système d'exploitation du terminal.

Par conséquent, dans ce mode de réalisation de l'invention, le réveil de la deuxième application se fait à l'initiative du module Proxy, ce qui permet d'économiser des ressources du terminal lorsque cette application n'a pas de raison d'être active.

Préférentiellement, ce déclenchement d'activation de la deuxième application se fait lorsque le Proxy reçoit une commande de la première application mise en oeuvre par l'élément sécurisé.

Dans un mode de réalisation particulier, la vérification de la présence de la deuxième application consiste à vérifier si une notification de présence a été reçue de cette application.

Préférentiellement, une telle notification sera envoyée par la deuxième application d'affichage lors de son installation dans le terminal ou à la mise sous tension du terminal.

Dans le mode particulier de réalisation de l'invention dans lequel la deuxième application est une application apte à afficher un menu STK enrichi par rapport au menu STK de base affiché par le module STK du terminal, le procédé peut comporter, suite à cette notification, une étape de désactivation du menu STK de base.

Dans un mode particulier de réalisation de l'invention, la deuxième application, par exemple l'application d'affichage enrichie, est une midlet.

Dans un mode particulier de réalisation de l'invention, la première application de l'élément sécurisé est une applet.

Dans un mode particulier de réalisation de l'invention, le système d'exploitation du terminal est le système Android, mais l'invention s'applique également au système d'exploitation iOS, RIM, Windows Phone.

### Brève description des dessins

D'autres caractéristiques et avantages de la présente invention ressortiront de la description faite ci-dessous en référence aux dessins annexés qui en illustrent un exemple de réalisation dépourvu de tout caractère limitatif sur les figures :
- la figure 1 représente un terminal et un élément sécurisé conformes à un mode particulier de réalisation de l'invention ;
- la figure 2 représente l'architecture logiciel du terminal et de l'élément sécurisé de la figure 1 ;
- les figures 3A et 3B représentent les principales étapes d'un procédé d'exécution conformes à un mode de réalisation de l'invention pour traiter respectivement des commandes simples et complexes. On détaillera plus précisément le traitement d'une commande simple de type « Display Text » et le traitement d'une commande complexe d'envoi d'un SMS ;
- la figure 4 représente des messages échangés entre une application d'une carte à microcircuit et une application d'un terminal conformément à l'art antérieur.

### Description détaillée d'un mode de réalisation

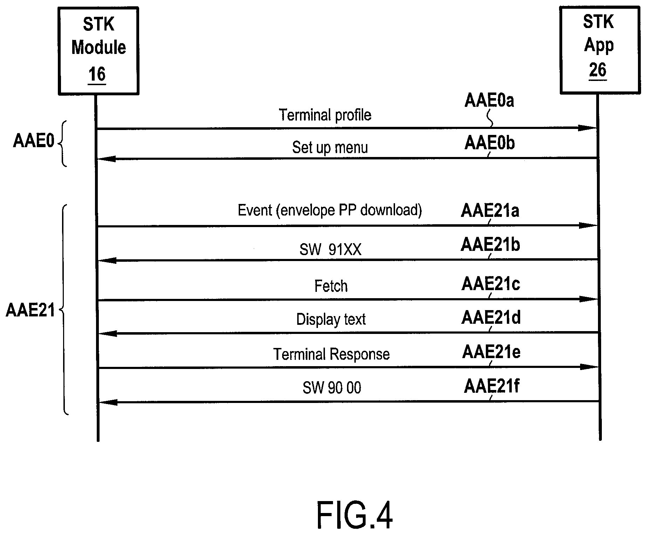

En référence à la figure 4, nous allons tout d'abord décrire un procédé connu de communication entre une application STK 26 mise en oeuvre par une carte à microcircuit et une module STK 16 mis en oeuvre par un terminal auquel est connectée cette carte à microcircuit. Ce procédé comporte deux étapes principales à savoir :
- une étape AAE0 permettant l'affichage, dans un menu SIM-Toolkit de l'interface utilisateur d'un terminal, d'une commande générée par l'application STK 26 de la carte à microcircuit ; et
- une étape AAE21 de traitement d'une commande d'affichage, par le terminal, sur réception d'un événement.

Plus précisément, l'étape AAEOa comporte l'envoi d'un message de type Terminal Profile par lequel le module STK du terminal indique à l'application de la carte à microcircuit les capacités du terminal pour afficher de telles commandes.

Au cours d'une étape AAE0b, l'application STK 26 de la carte à microcircuit communique au module STK 16 du terminal un jeu de commandes compatible avec les caractéristiques reçues à l'étape précédente. Ces commandes comportent les entrées du menu SIM-Toolkit de l'interface utilisateur du terminal.

L'étape AAE21 est mise en oeuvre sur détection d'un événement prédéterminé, par exemple la réception d'un SMS ou d'une commande de navigation de l'utilisateur dans le menu SIM-Toolkit.

Lorsqu'un tel événement est détecté, le module STK 16 du terminal envoie, à la sous-étape AAE21a un message de notification à l'application STK 26 de la carte à microcircuit 2 pour lui communiquer le type d'événement.

Lorsque l'application 26 de la carte à microcircuit a des opérations à effectuer suite à un tel événement, elle répond au module STK 16 du terminal par une réponse de type SW 91 XX.

Il est connu de l'homme du métier que les lettres XX désignent la longueur de la commande qui sera envoyée ultérieurement par l'application STK 26, les lettres SW étant les initiales des mots Status Word.

Sur réception d'une telle réponse, le module STK 16 du terminal envoie à l'application 26 de la carte à microcircuit une commande de type Fetch au cours d'une sous-étape AAE21c.

Sur réception de la commande Fetch, l'application 26 de la carte à microcircuit envoie, au cours d'une étape AAE21d une commande Display text pour afficher le contenu du SMS ou l'entrée du menu correspondant à la navigation de l'utilisateur.

Une fois que la commande d'affichage a été exécutée par le terminal, le module STK 16 du terminal envoie, au cours d'une étape AAE21e un message de type Terminal Response à l'application 26 de la carte à microcircuit afin de transmettre à l'application STK 26 le résultat de l'execution de la commande.

Dans l'exemple de réalisation décrit ici, l'application STK 26 de la carte à microcircuit n'a pas d'autre opération à effectuer ; elle répond par conséquent à ce message Terminal Response par l'envoi d'un message de type SW 90 00 (étape AAE21f). Ce message termine la session STK.

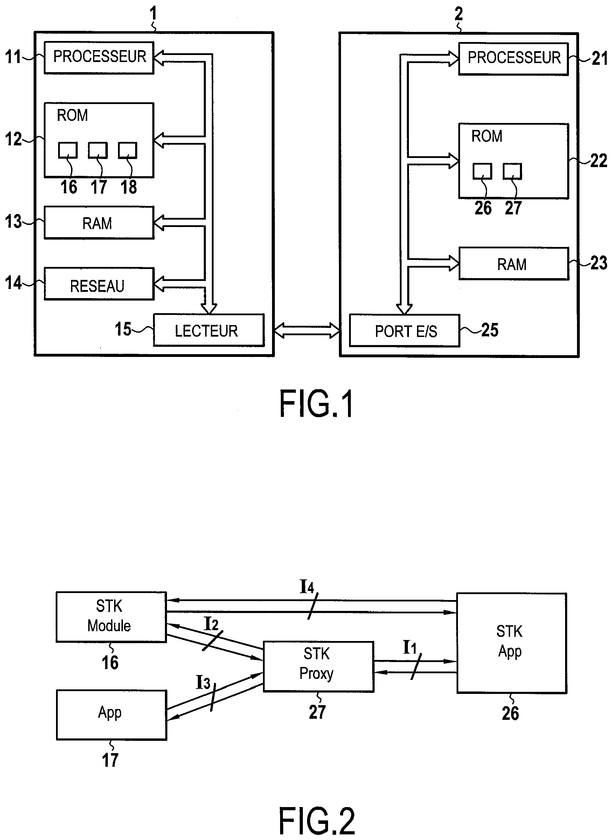

En référence à la figure 1, nous allons maintenant décrire un terminal 1 et un élément sécurisé 2 conformes à l'invention, cet élément sécurisé 2 comportant un module logiciel de type Proxy 27 conforme à l'invention.

Dans le mode de réalisation décrit ici, l'élément sécurisé 2 est une carte à microcircuit conforme à la norme ISO 7816 et certifiée conforme aux critères communs FIPS.

Le terminal 1 présente l'architecture conventionnelle d'un ordinateur. Il comporte notamment un processeur 11, une mémoire morte de type ROM 12, une mémoire vive de type RAM 13, des moyens 14 de communication et un lecteur 15 permettant au terminal de se connecter à la une carte à microcircuit 2. L'invention peut être mise en oeuvre dans un terminal de type téléphone, auquel cas les moyens 14 de communication sont des moyens permettant au terminal de se connecter avec un réseau téléphonique.

La mémoire morte de type ROM 12 comporte un module STK 16 connu de l'homme du métier, ce module pouvant être de type logiciel ou matériel. La mémoire morte de type ROM 12 comporte également un système d'exploitation 18, à savoir, dans cet exemple, le système Android.

Le terminal 1 est remarquable en ce qu'il comporte, dans sa mémoire morte 12, une application d'affichage enrichi 17 apte à exécuter une commande d'affichage envoyée par le module Proxy 27 de la carte à microcircuit 2. L'application 17 d'affichage enrichi est une application apte à enrichir l'interface graphique des entrées du menu SIM-Toolkit ; elle permet par exemple d'utiliser des polices de caractères évoluées, des couleurs de caractères particulières, des fonds d'écran, des logos, des images graphiques, des images animées, des liens hypertextes. D'une façon générale, l'application 17 d'affichage enrichi utilise les ressources du système d'exploitation 18 auquel elle s'interface par une API (Application Programmable Interface).

Dans l'exemple de réalisation décrit ici, la carte à microcircuit 2 présente aussi l'architecture matérielle d'un ordinateur. Elle comporte un processeur 21, une mémoire morte de type ROM 22, une mémoire vive de type RAM 23 et des ports d'entrée-sortie 25 aptes à s'interfacer avec le lecteur 15 du terminal 1. La mémoire morte 22 est remarquable en ce qu'elle comporte :
- une application 26 apte à envoyer des commandes STK selon le protocole ETSI TS 101.267, de telles commandes étant normalement destinées au module STK 16 du terminal 1 ; et
- un module logiciel 27 de type Proxy conforme à l'invention apte à reformater les commandes STK reçues de l'application 26 et à les encapsuler pour les envoyer à l'application 17.

Dans cet exemple, la carte à microcircuit 2 met en oeuvre le système d'exploitation java OS et l'application logicielle 26 s'interface avec le module 27 de type Proxy via une interface Shareable connue de l'homme du métier.

La figure 2 représente les interfaces entre les modules logiciels 16, 17, 26 et 27 de la figure 1.

Plus précisément :
- l'interface I4 entre le module STK 16 du terminal et l'application 26 de la carte à microcircuit est conforme au protocole ETSI TS 101.267 ;
- l'interface I2 entre le module STK 16 du terminal 1 et le module Proxy 27 de la carte à microcircuit est conforme au protocole ETSI TS 101.267.

Lorsque la carte à microcircuit 2 met en oeuvre un système d'exploitation de type Java OS, l'interface I1 entre le module Proxy 27 et l'application 26 peut être de type Shareable interface.

Lorsque l'application 17 du terminal 1 est une midlet, l'interface I3 entre cette application 17 et le module Proxy 27 de la carte à microcircuit 2 est de type JSR 177 ; dans d'autres variantes l'application 17 et le module Proxy 27 dialoguent selon un protocole propriétaire.

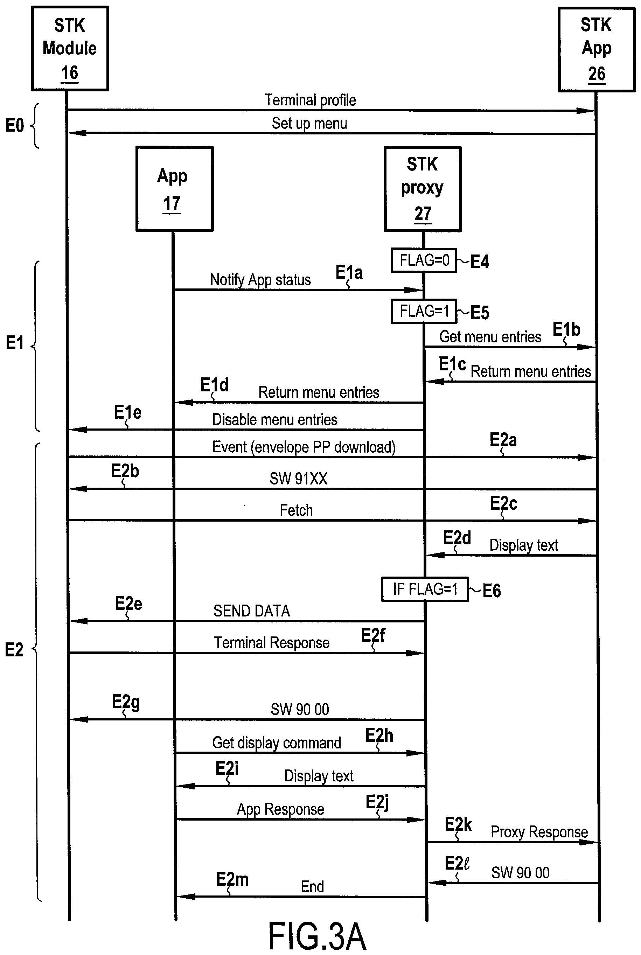

En référence à la figure 3A, nous allons maintenant décrire, dans un exemple de réalisation particulier, des messages échangés entre les différents modules logiciels 16, 17, 26 et 27.

Dans cet exemple, on distingue trois étapes principales E0 à E2, dans lesquelles :
- l'étape E0 est une étape d'initialisation et de configuration du menu STK de l'interface utilisateur du terminal 1 ;
- l'étape E1 est une étape de désactivation de ce menu ; et
- l'étape E2 est une étape d'affichage enrichi d'une commande simple (dans cet exemple la commande Display Text) sur détection d'un événement.

On rappelle que l'invention propose un affichage enrichi, lorsque le terminal comporte une application d'affichage enrichi 17 apte à enrichir l'affichage des commandes du module SIM-Toolkit, et un fonctionnement normal, à savoir avec un affichage de base des commandes du menu SIM-Toolkit, lorsque le terminal 1 ne comporte pas une telle application.

Dans le mode de réalisation décrit ici, le module 27 Proxy mémorise un drapeau (flag) représentatif de la présence ou non d'une application d'affichage enrichi 17 dans le terminal 1.

Par conséquent, à l'initialisation, le procédé mis en oeuvre par le module 27 de type Proxy comporte une étape E4 positionnant ce drapeau à la valeur 0, représentative de l'absence d'une application d'affichage enrichi 17 dans le terminal 1.

L'étape E0 est similaire à l'étape AAE0 de l'état de la technique décrite précisément en référence à la figure 4. On rappelle que cette étape permet l'affichage du menu STK de base de l'interface homme-machine du terminal 1, les éléments affichés étant envoyés par l'application 26 de la carte à microcircuit en prenant en compte les caractéristiques d'affichage du terminal 1.

On rappelle que l'invention permet de proposer, à l'utilisateur du terminal 1, un menu SIM-Toolkit présentant des caractéristiques graphiques améliorées par rapport à ce menu SIM-Toolkit de base.

Dans le mode de réalisation décrit ici, l'invention propose, au cours de l'étape E1, de désactiver le menu de base de sorte que seul le menu enrichi soit accessible à l'utilisateur. Plus précisément, dans le mode de réalisation décrit ici, l'application d'affichage enrichi 17 du terminal 1 envoie, au cours d'une étape E1a, un message de notification au module Proxy 27 pour notifier sa présence. Cette notification peut être envoyée à la mise sous tension du terminal 1 ou suite à l'installation de l'application d'affichage enrichi 17 dans la mémoire morte 12 du terminal.

Sur réception d'un tel message de notification, le module 27 de type Proxy positionne le drapeau flag à la valeur 1, cette valeur étant représentative de la présence de l'application 17 d'affichage enrichi dans le terminal 1.

Le module Proxy 27 envoie également, au cours d'une étape E1b, une commande à l'application 26 de la carte à microcircuit pour obtenir les commandes qui doivent être affichées dans le menu SIM-Toolkit.

Ces commandes sont retournées par l'application 26 et reçues par le module logiciel Proxy 27 au cours d'une étape E1c.

Au cours d'une étape E1d, le module logiciel de type Proxy communique ces commandes à l'application d'affichage enrichi 17 du terminal 1. Les commandes reçues de l'application STK 26 sont simplement encapsulées selon un protocole propriétaire mis en oeuvre entre le module Proxy 27 et l'application logiciel 17.

On comprend, qu'à cet instant précis, l'utilisateur peut accéder à deux menus STK soit le menu de base résultat de l'étape E0, soit le menu enrichi par la mise en oeuvre de l'application 17.

De façon avantageuse, dans ce mode de réalisation, l'invention propose de désactiver le menu de base. A cet effet, le module Proxy 27 envoie, au cours d'une étape E1e, une commande au module STK 16 du terminal 1 pour qu'il désactive le menu STK de base.

L'étape E2 qui va maintenant être décrite est une étape d'affichage d'une commande par le terminal 1 suite à la détection d'un événement prédéterminé.

Nous prendrons l'exemple dans lequel l'événement précité correspond à la réception d'un SMS par le terminal 1 à destination de la carte à microcircuit. Un événement correspondant à la détection de la navigation de l'utilisateur dans le menu SIM Toolkit enrichi serait traité de façon similaire.

Cette étape E2 comporte des similitudes avec l'étape AAE21 de l'art antérieur décrite précédemment en référence à la figure 4.

En particulier, les étapes E2a, E2b et E2c correspondent exactement aux étapes AAE21a, AAE21b et AAE21c. On rappelle ici que sur réception d'un SMS, le module STK 16 envoie notification de l'événement à l'application 26 de la carte à microcircuit 2 (étape E2a), que celui-ci répond par un message SW 91 XX (étape E2b), représentative du fait que l'application 26 a des opérations à effectuer, suite à quoi le module STK 16 renvoie une commande de type Fetch (étape E2c) à l'application 26.

On rappelle que dans l'art antérieur, sur réception d'une telle commande Fetch, l'application 26 de la carte à microcircuit envoie une commande Display text, conformément au protocole ETSI TS 101.6.27, au module STK 16 du terminal.

Conformément à l'invention, en revanche, cette commande est envoyée au module Proxy 27 de la carte à microcircuit 2, via l'interface I1 (étape E2d).

Sur réception de cette commande Display text, le module Proxy 27 vérifie, au cours d'une étape E6, si le terminal 1 comporte une application 17 d'affichage enrichi. Dans l'exemple décrit ici, c'est le cas (drapeau positionné à 1).

Dans le mode de réalisation décrit ici, on suppose que l'application 17 d'affichage enrichi du terminal 1 est en veille et qu'elle doit être réveillée pour traiter les commandes d'affichage enrichi. A cet effet, et de façon avantageuse, le module Proxy 27 envoie, au cours d'une étape E2e, une commande de type SEND DATA au module STK 16.

Sur réception d'une telle commande, le système d'exploitation 18 du terminal 1 diffuse l'information à toutes les applications enregistrées sur cet événement ce qui a pour effet de réveiller l'application 17 d'affichage enrichi.

Le module STK 16 répond aux commandes de type SEND DATA par l'envoi d'un message de type Terminal Response reçu par le module 27 de type Proxy de la carte à microcircuit 2 au cours d'une étape E2f.

Sur réception de cette réponse, le module de type proxy 27 considère que la commande SEND DATA a été traitée et répond, d'une façon similaire à celle décrite dans l'art antérieur, par l'envoi d'un message de type SW 90 00 (étape E2g), à destination du module STK 16, pour signifier qu'elle n'a plus de traitement à effectuer.

La session SIM Toolkit est alors terminée.

L'homme du métier comprendra qu'en réalité la commande d'affichage n'a pas encore été traitée.

Conformément à ce mode de réalisation particulier, lorsque l'application 17 d'affichage enrichi a été réveillée par le système d'exploitation 18, elle envoie, au module Proxy 27, une requête de commande d'affichage, au cours d'une étape E2h.

Sur réception de cette commande, le module Proxy 27 envoie (étape E2i), à l'application 17 d'affichage enrichi une commande Display text, le contenu de ce message correspondant au contenu de la commande Display text reçue de l'application STK 26 à l'étape E2d.

Nous supposerons que l'application 17 affiche, de façon enrichie, le texte reçu à l'étape E2i, et qu'elle fait état de cet affichage en renvoyant un message de type Terminal Response (étape E2j) au module Proxy 27.

Dans cet exemple, la réponse de l'application 17 d'affichage enrichi ne donne lieu aucune action supplémentaire. La commande d'affichage ayant été exécutée dans son intégralité, le proxy 27 envoie, lors d'une étape E2k, une réponse à l'application STK 26 concernant l'exécution de la commande d'affichage reçue à l'étape E2d. Aucune nouvelle action supplémentaire ne devant être exécutée, l'application STK 26 répond au module proxy 27 par un message de fin de traitement de type SW 90 00. Le module proxy 27 désactive alors l'application 17 d'affichage enrichi lors de l'étape E2m. Cette étape met fin à l'étape E2 d'affichage d'une commande en présence de l'application 17 d'affichage enrichi.

Par contre, dans le cas où le module Proxy 27, détermine, à l'étape E6, suite à la réception d'un message Display text de l'application 26, que le terminal 1 ne comporte pas d'application 17 d'affichage enrichi, il se comporte comme dans l'art antérieur.

Dans ce cas, le Proxy 27 transmet la commande Display text à l'étape E2d au module STK 16 du terminal 1 de façon similaire à l'étape AAE21d décrite précédemment en référence à la figure 4. L'homme du métier comprendra que, dans ce scénario, la procédure d'affichage du menu de base, se termine par l'envoi des messages AAE21e et AAE21f.

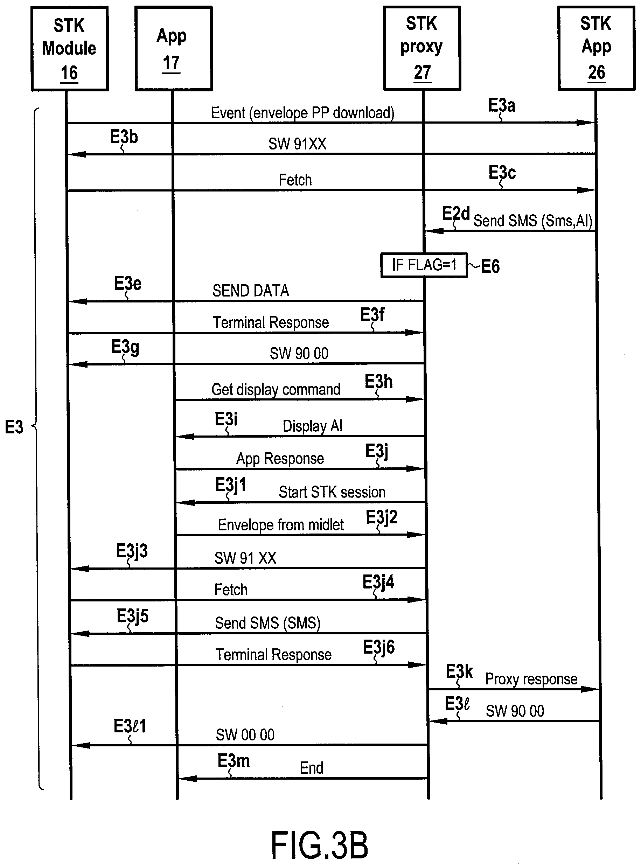

En référence à la figure 3B, nous allons décrire les étapes du procédé mises en oeuvre pour le traitement d'une commande complexe, c'est-à-dire lorsque la commande d'affichage est combinée à une autre commande. Cette autre commande n'étant pas une commande d'affichage, elle sera exécutée par le module STK 16.

Plus particulièrement, nous décrirons l'étape E3 d'affichage enrichi d'une commande complexe.

Dans l'exemple décrit ici, l'étape E3 se substitue à l'étape E2 du procédé d'exécution décrit à la figure 3A. Les étapes E3a à E3m sont similaires aux étapes E2a à E2m précédemment décrites. L'étape E3 diffère de l'étape E2 en ce que les étapes E3j1 à E3j6 ainsi que l'étape E3l1 ont été introduites.

Nous allons maintenant décrire les différentes sous-étapes de l'étape E3.

Sur réception d'un évènement demandant l'exécution d'une commande complexe (étape E3a), l'application STK 26 envoie (étape E3b) une commande de type SW 91 XX signalant qu'elle est prête à envoyer une commande de taille XX. En réponse, le module STK 16 envoie une commande de type Fetch à l'application STK 26 (étape E3c).

Dans l'exemple décrit ici, l'événement de l'étape E3a est celui du déclenchement de l'envoi d'un SMS par l'application STK 26.

Lors de l'étape E3d, l'application STK 26 envoie donc la commande d'envoi de SMS au module logiciel de type proxy 27.

La commande Send SMS contient plusieurs arguments dont des informations relatives au SMS à envoyer (SMS) et un message à afficher (AI, Alpha Identifier en Anglais). Ce message correspond, par exemple, à un message de type « envoi du SMS en cours... ». Il s'agit donc d'une commande complexe combinant une commande d'affichage à une autre commande.

Dans ce mode de réalisation de l'invention, le module Proxy 27 parcourt la commande complexe et identifie la partie texte à afficher. Il extrait cette partie et reconstruit la commande STK, sans le texte, pour le module STK 16. La partie texte est envoyée à l'application d'affichage enrichi 17 dans un format propriétaire.

A la réception de la commande complexe d'envoi de SMS par le module logiciel de type proxy 27, le module proxy vérifie, lors d'une étape E6, si une application 17 d'affichage enrichi a été installée. C'est ici le cas puisque le drapeau est égal à 1. Dans ce cas, les étapes E3e à E3m sont exécutées.

Les étapes E3e à E3g permettent, par l'envoi d'une commande SEND DATA de réveiller l'application 17 d'affichage enrichi par le système d'exploitation 18 et la fermeture de la session STK ouverte à l'étape E3a.

L'application 17 d'affichage enrichi répond alors en envoyant la commande « Get display command » au module 27 de type proxy (étape E3h). En réponse, le proxy 27 envoie une commande d'affichage du message AI à l'application 17 d'affichage enrichi lors d'une étape E3i. Après avoir affiché le message AI, l'application 17 envoie une réponse au proxy 27 lors d'une étape E3j. Ces étapes sont semblables aux étapes E2h, E2i et E2j décrites précédemment en référence à la figure 3A.

S'agissant ici d'une commande complexe de type « send SMS », le module STK 16 doit intervenir pour envoyer le SMS. La session STK ayant été fermée, une nouvelle session STK doit être ouverte ; les étapes E3j1 à E3j3 sont exécutées à cette fin. Lors de l'étape E3j1, le proxy 27 envoie une requête propriétaire « Start STK session » à l'application 17 pour ouvrir une session STK. L'application lui répond lors de l'étape E3j2 et le proxy 27 envoie la commande SW 91 XX permettant d'ouvrir une session STK lors d'une étape E3j3.

Suite à l'étape E3j3, une session STK ayant été ouverte, les opérations liées à l'envoi du SMS peuvent être exécutées. Il s'agit des étapes E3j4 à E3j6.

A l'étape E3j4, le module STK 16 envoie une commande de type FETCH au proxy 27. Le proxy envoie alors la commande d'envoi de SMS avec les informations relatives au contenu à envoyer au module STK lors d'une étape E3j5 sans les options d'affichage. En réponse à l'exécution de cette commande, le module STK envoie une commande de type « Terminal response » au proxy lors d'une étape E3j6.

La commande d'envoi de SMS ayant été exécutée dans son intégralité, le proxy 27 envoie, lors d'une étape E3k, une réponse à l'application STK 26 concernant l'exécution de cette commande complexe. Le proxy 27 combine alors, s'il y a lieu, la réponse donnée par le module STK 16 suite à l'exécution de la commande d'envoi de SMS (étape E3j6) et la réponse donnée par l'application 17 d'affichage enrichi suite à l'affichage du message AI (étape E3j). Ici, l'affichage du message AI ne donnant lieu à aucune réponse particulière, la réponse envoyée lors de l'étape E3k ne contient que la réponse du module STK.

En pratique, le message AI peut être affiché jusqu'à expiration d'un timer ou jusqu'à ce que l'utilisateur appuie sur un bouton « OK » ou « Cancel » par exemple.

Lors d'une étape E3l, si aucune autre commande ne doit être exécutée, l'application STK 26 de la carte à microcircuit envoie une commande de type SW 90 00 destinée à clôturer les opérations.

Le proxy 27 envoie donc, lors d'une étape E3l1, un message SW 90 00 au module STK 16 afin de clôturer la session STK ainsi qu'un message destiné à désactiver l'application 17 d'affichage enrichi, lors d'une étape E3m.

En variante et de façon non représentée, si d'autres commandes sont à exécuter, l'application STK 26 envoie une commande de type SW 91 XX au proxy 27.

## Revendications

1. Procédé mis en oeuvre par un module logiciel (27) de type proxy d'un élément sécurisé (2) réalisant l'interface entre une première application (26) mise en oeuvre par ledit élément sécurisé (2) connecté à un terminal (1) et un module (16) de ce terminal (1), ledit module étant apte à exécuter une commande reçue de ladite première application (26) afin d'obtenir un premier résultat, ce procédé comportant :
- une étape (E6) pour vérifier si ledit terminal (1) comporte une deuxième application (17) apte à exécuter ladite commande afin d'obtenir un deuxième résultat enrichi par rapport au premier résultat, grâce à l'utilisation de ressources dudit terminal,
- si c'est le cas, une étape (E2j) d'envoi de ladite commande à ladite deuxième application (17), et
- si ce n'est pas le cas, une étape (AAE211) d'envoi de ladite commande audit module.

2. Procédé selon la revendication 1, **caractérisé en ce que** ladite première application est une application STK, et **en ce que** ledit module (16) est un module STK apte à traiter des commandes STK reçues de ladite première application (26) selon le protocole ETSI TS 101.267.

3. Procédé selon la revendication 1 ou 2 **caractérisé en ce qu'**il comporte une étape d'envoi audit module (16), d'au moins une autre commande reçue en combinaison avec ladite commande.

4. Procédé selon la revendication 2 et 3 **caractérisé en ce qu'**il comporte une étape d'envoi audit module STK, selon le protocole ETSI TS 101.267, de toute autre commande reçue en combinaison avec ladite commande.

5. Procédé selon l'une quelconque des revendications 1 à 4, **caractérisé en ce qu'**il comporte une étape (E26) d'envoi d'une commande audit module pour déclencher l'activation de ladite deuxième application (17) par un système d'exploitation (18) du terminal.

6. Procédé selon les revendications 1 à 5, **caractérisé en ce que** l'étape (E6) de vérification de la présence de ladite deuxième application (17) consiste à vérifier (E1a) si une notification de présence a été reçue de ladite deuxième application (17).

7. Procédé selon l'une quelconque des revendications 2 à 6, **caractérisé en ce que** ladite commande est une commande d'affichage et ladite deuxième application (17) une application apte à afficher un menu STK enrichi par rapport au menu STK de base affiché par ledit module STK.

8. Procédé selon les revendications 6 et 7, **caractérisé en ce qu'**il comporte, suite à ladite notification, une étape (E1e) de désactivation dudit menu STK de base.

9. Programme d'ordinateur comprenant des instructions pour exécuter les étapes d'un procédé selon l'une des revendications 1 à 7 lorsque ce programme est exécuté par un processeur d'un élément sécurisé.

10. Elément sécurisé (2) connectable à un terminal (1), ledit élément sécurisé comprenant des moyens pour exécuter une première application (26) apte à envoyer une commande à un module (16) du terminal et des moyens pour exécuter un programme d'ordinateur selon la revendication 9.

11. Elément sécurisé selon la revendication 10, **caractérisé en ce qu'**il est conforme à la norme ISO 7816 et/ou aux Critères Communs et/ou à la norme FIPS (Federal Information Processing Standard).

12. Terminal (1) comprenant des moyens de connexion à un élément sécurisé (2) selon la revendication 10 ou 11, un module apte à exécuter une commande reçue d'une première application (26) de cet élément sécurisé afin d'obtenir un premier résultat et des moyens pour exécuter une deuxième application (17) apte à recevoir ladite commande d'un module logiciel de type proxy (27) de l'élément sécurisé (2) lorsque l'élément sécurisé exécute le programme d'ordinateur selon la revendication 9 et à exécuter ladite commande afin d'obtenir un deuxième résultat enrichi par rapport au premier résultat, grâce à l'utilisation de ressources dudit terminal.

## Patentansprüche

1. Verfahren, das durch ein Softwaremodul (27) vom Proxy-Typ eines geschützten Elements (2) umgesetzt wird, wobei die Schnittstelle zwischen einer ersten Anwendung (26), die von dem geschützten Element (2) umgesetzt wird, das mit einem Endgerät (1) verbunden ist, und einem Modul (16) dieses Endgeräts (1) umgesetzt wird, wobei das Modul dazu geeignet ist, einen Befehl auszuführen, der von der ersten Anwendung (26) empfangen wird, um ein erstes Ergebnis zu erhalten, wobei das Verfahren umfasst:
- einen Schritt (E6) zum Überprüfen, ob das Endgerät (1) eine zweite Anwendung (17) umfasst, die dazu geeignet ist, den Befehl auszuführen, um ein zweites Ergebnis, das in Bezug auf das erste Ergebnis angereichert ist, dank der Verwendung von Ressourcen des Endgeräts zu erhalten,
- wenn dies der Fall ist, einen Schritt (E2j) zum Senden des Befehls zu der zweiten Anwendung (17), und
- wenn dies nicht der Fall ist, einen Schritt (AAE211) zum Senden des Befehls zu dem Modul.

2. Verfahren nach Anspruch 1, **dadurch gekennzeichnet, dass** die erste Anwendung eine STK-Anwendung ist, und dadurch, dass das Modul (16) ein STK-Modul ist, das dazu geeignet ist, die von der ersten Anwendung (26) empfangenen STK-Befehle gemäß dem Protokoll ETSI TS 101.267 zu behandeln.

3. Verfahren nach Anspruch 1 oder 2, **dadurch gekennzeichnet, dass** es einen Schritt zum Senden von mindestens einem weiteren Befehl, der in Kombination mit dem Befehl empfangen wurde, zu dem Modul (16) umfasst.

4. Verfahren nach Anspruch 2 und 3, **dadurch gekennzeichnet, dass** es einen Schritt zum Senden von jedem weiteren Befehl, der in Kombination mit dem Befehl empfangen wurde, gemäß dem Protokoll ETSI TS 101.267 zu dem STK-Modul umfasst.

5. Verfahren nach einem der Ansprüche 1 bis 4, **dadurch gekennzeichnet, dass** es einen Schritt (E26) zum Senden eines Befehls zu dem Modul umfasst, um die Aktivierung der zweiten Anwendung (17) durch ein Betriebssystem (18) des Endgeräts auszulösen.

6. Verfahren nach den Ansprüchen 1 bis 5, **dadurch gekennzeichnet, dass** der Schritt (E6) zur Überprüfung des Vorhandenseins der zweiten Anwendung (17) daraus besteht, zu überprüfen (E1a), ob eine Benachrichtigung hinsichtlich des Vorhandenseins von der zweiten Anwendung (17) empfangen wurde.

7. Verfahren nach einem der Ansprüche 2 bis 6, **dadurch gekennzeichnet, dass** der Befehl ein Anzeigebefehl ist und die zweite Anwendung (17) eine Anwendung ist, die dazu geeignet ist, ein STK-Menü anzuzeigen, das in Bezug auf das Basis-STK-Menü angereichert ist, das von dem STK-Modul angezeigt wird.

8. Verfahren nach den Ansprüchen 6 und 7, **dadurch gekennzeichnet, dass** es nach der Benachrichtigung einen Schritt (E1e) zur Deaktivierung des Basis-STK-Menüs umfasst.

9. Computerprogramm, umfassend Anweisungen zur Ausführung der Schritte eines Verfahrens nach einem der Ansprüche 1 bis 7, wenn dieses Programm von einem Prozessor eines geschützten Elements ausgeführt wird.

10. Geschütztes Element (2), das mit einem Endgerät (1) verbunden werden kann, wobei das geschützte Element Mittel zur Ausführung einer ersten Anwendung (26), die dazu geeignet ist, einen Befehl zu einem Modul (16) des Endgeräts zu senden, und Mittel zur Ausführung eines Computerprogramms nach Anspruch 9 umfasst.

11. Geschütztes Element nach Anspruch 10, **dadurch gekennzeichnet, dass** es der Norm ISO 7816 und/oder den Common Criteria und/oder der FIPS-Norm (Federal Information Processing Standard) entspricht.

12. Endgerät (1), umfassend Mittel zur Verbindung mit einem geschützten Element (2) nach Anspruch 10 oder 11, ein Modul, das dazu geeignet ist, einen Befehl auszuführen, der von einer ersten Anwendung (26) des geschützten Elements empfangen wurde, um ein erstes Ergebnis zu erhalten, und Mittel zur Ausführung einer zweiten Anwendung (17), die dazu geeignet ist, den Befehl von einem Softwaremodul (27) vom Proxy-Typ des geschützten Elements (2) zu empfangen, wenn das geschützte Element das Computerprogramm nach Anspruch 9 ausführt, und den Befehl auszuführen, um ein zweites Ergebnis, das in Bezug auf das erste Ergebnis angereichert ist, dank der Verwendung von Ressourcen des Endgeräts zu erhalten.

## Claims

1. A method implemented by a proxy-type software module (27) of a secure element (2) interfacing between a first application (26) implemented by said secure element (2) connected to a terminal (1) and to a module (16) of this terminal (1), said module being adapted to execute a command received from said first application (26) in order to achieve a first result, this method including:
- a step (E6) of checking whether said terminal (1) includes a second application (17) adapted to execute said command in order to achieve a second result enhanced compared to the first result, thanks to the use of resources of said terminal,
- if so, a step (E2j) of sending said command to said second application (17), and
- if not, a step (AAE211) of sending said command to said module.

2. The method according to claim 1, **characterized in that** said first application is an STK application, and **in that** said module (16) is an STK module adapted to process STK commands received from said first application (26) according to the ETSI TS 101.267 protocol.

3. The method according to claim 1 or 2, **characterized in that** it includes a step of sending, to said module (16), at least another command received in combination with said command.

4. The method according to claims 2 and 3, **characterized in that** it includes a step of sending, to said STK module, according to the ETSI TS 101.267 protocol, any other command received in combination with said command.

5. The method according to any one of claims 1 to 4, **characterized in that** it includes a step (E26) of sending a command to said module in order to trigger the activation of said second application (17) by an operating system (18) of the terminal.

6. The method according to claims 1 to 5, **characterized in that** the step (E6) of checking the presence of said second application (17) consists in checking (Ela) whether a presence notification has been received from said second application (17) .

7. The method according to any one of claims 2 to 6, **characterized in that** said command is a display command and said second application (17) is an application adapted to display an STK menu enhanced compared to the basic STK menu displayed by said STK module.

8. The method according to claims 6 and 7, **characterized in that** it includes, following said notification, a step (E1e) of deactivating said basic STK menu.

9. A computer program comprising instructions for performing the steps of a method according to any of claims 1 to 7 when this program is run by a processor of a secure element.

10. A secure element (2) connectable to a terminal (1), said secure element comprising means for running a first application (26) adapted to send a command to a module (16) of the terminal and means for running a computer program according to the claim 9.

11. The secure element according to claim 10, **characterized in that** it complies with the ISO 7816 standard and/or with the Common Criteria and/or with the FIPS standard (Federal Information Processing Standard).

12. A terminal (1) comprising means for connection to a secure element (2) according to claim 10 or 11, a module adapted to execute a command received from a first application (26) of this secure element in order to achieve a first result and means for running a second application (17) adapted to receive said command of a proxy-type software module (27) of the secure element (2) when the secure element runs the computer program according to claim 9 and to execute said command in order to achieve a second result enhanced compared to the first result, through the use of resources of said terminal.
